# FASCICULE DE BREVET EUROPEEN

(11) **EP 0 506 555 B1**
(45) Date de publication et mention de la délivrance du brevet: **07.12.1994**
(21) Numéro de dépôt: 92400806.3
(22) Date de dépôt: 25.03.1992
(51) Int. Cl.: B60N 2/00, A47C 7/18

(54) **Perfectionnements aux dossiers de sièges de véhicules**
Fahrzeugsitzrückenlehnen
Vehicle seat backrests

(30) Priorité: 28.03.1991 FR 9103785
(43) Date de publication de la demande: 30.09.1992
(73) Titulaire: BERTRAND FAURE AUTOMOBILE "B.F.A.", F-91300 Massy (FR)
(72) Inventeur: Boisset, Bernard, F-91150 Etampes (FR)
(74) Mandataire: Behaghel, Pierre

(56) Documents cités:
- FR-A- 2 562 001
- US-A- 4 558 905
- US-A- 4 699 427
- US-A- 4 747 638

## Description

L'invention est relative aux dossiers de sièges de véhicules, notamment aux dossiers des sièges avant des véhicules de tourisme.

Elle concerne plus particulièrement, parmi ces dossiers, ceux qui sont constitués par un cadre rigide en U renversé, généralement tubulaire, par une nappe élastique tendue à l'intérieur de ce cadre et par une matelassure en matière souple et élastique recouvrant ledit cadre et la face avant de ladite nappe.

Elle concerne plus particulièrement encore les dossiers du genre en question dont la face arrière est rentrante, c'est-à-dire présente un creux.

Une telle configuration est avantageuse à plusieurs titres.

En particulier, le creux en question peut recevoir les genoux pliés de la personne assise à l'arrière du dossier considéré, ce qui augmente son confort pour une longueur donnée du véhicule correspondant et, pour cette raison entre autres, un arrière de dossier creusé est généralement considéré comme plus esthétique qu'un arrière plat.

Pour réaliser de tels arrières creux de dossier, il a déjà été proposé de rapporter sur le cadre du dossier, lequel est disposé en retrait à l'intérieur du contour apparent extérieur de la matelassure, des profilés en matière plastique ouverts de façon étranglée vers le centre du cadre et formant ensemble un U renversé et d'introduire dans les ouvertures étranglées de ces profilés les bords latéraux et supérieur d'un panneau rectangulaire vertical ou peu incliné sur la verticale, destiné à constituer le fond du creux.

Cette formule présente un certain nombre d'inconvénients et en particulier les suivants : les profilés en matière plastique sont chers ; leur montage sur le cadre, généralement réalisé par rivetage après peinture dudit cadre, est lui-même fastidieux et onéreux ; et surtout, l'accrochage des bords du panneau sur les profilés n'est pas suffisamment solide pour rendre possible le montage d'un filet porte-revues ou analogue au voisinage de ces bords.

L'invention a pour but, surtout, de supprimer ces différents inconvénients.

A cet effet, les dossiers de sièges du genre en question selon l'invention sont essentiellement caractérisés en ce qu'ils comprennent :
- trois profilés métalliques au moins partiellement en J constituant respectivement deux montants et une traverse horizontale supérieure et formant ensemble un U renversé, soudés sur le cadre de façon à présenter les bases des J vers l'intérieur de ce cadre avec leurs ouvertures orientées vers l'extérieur dudit cadre, chaque ouverture de J étant occupée par un bord adjacent du garnissage qui recouvre la matelassure, de préférence rigidifié par une baguette rigide,
- une barre métallique horizontale également soudée sur le cadre à la base arrière du dossier,
- un panneau souple vertical ou peu incliné sur la verticale bordé latéralement par deux ourlets et supérieurement par une ligne horizontale de couture le long du bord contigu du garnissage,
- et deux tiges métalliques coudées en L comprenant chacune un brin vertical ou peu incliné sur la verticale logé dans l'un des deux ourlets ci-dessus, brin dont l'extrémité supérieure est fixée sur la traverse, et un brin inférieur horizontal fixé sur la barre.

Dans des modes de réalisation préférés, on a recours en outre à l'une et/ou à l'autre des dispositions suivantes :
- la fixation de chaque extrémité supérieure de tige coudée sur la traverse est effectuée en faisant traverser à force par cette extrémité, coiffée de préférence par une tétine en matière plastique ou élastomère, un canal constitué par un crevé pratiqué au voisinage de l'une des deux extrémités horizontales de la traverse,
- la fixation de chaque brin inférieur de tige coudée sur la barre est effectuée par agrafage sur un tronçon décalé de cette barre.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ces dessins, montrent en perspective, respectivement, la structure métallique d'un siège de véhicule dont le dossier est établi conformément à l'invention et la matelassure destinée à équiper ce dossier.

Les figures 3, 4 et 5 sont respectivement une coupe verticale médiane du dossier équipé de sa matelassure, une coupe horizontale de cet ensemble selon IV-IV, figure 3, et une coupe horizontale partielle dudit ensemble selon V-V, figure 3.

La figure 6 montre en perspective la structure de siège de la figure 1 dont le dossier est équipé de sa matelassure conformément à l'invention.

La figure 7 est une variante d'une portion de la figure 4.

La structure de siège considérée comprend :
- un cadre de dossier constitué par un tube métallique 1 recourbé selon un U renversé et dont les deux ailes sont terminées inférieurement par des flasques longitudinaux 2,
- et un cadre d'assise également constitué par un tube métallique 3 recourbé selon un U horizontal dont les deux ailes, s'étendant vers l'arrière, sont terminées par des flasques verticaux 4.

Les flasques 4 sont montés sur les flasques 2 d'une façon pivotante autour d'un axe horizontal H et sont associés à un mécanisme de réglage d'inclinaison du dossier non représenté.

D'une façon connue en soi, des nappes élastiques, constituées par des ressorts non représentés, sont tendus en travers des deux cadres.

L'ensemble constitué par le cadre 1 du dossier et la nappe élastique N correspondante est recouvert par une matelassure épaisse 5 en mousse élastique elle-même revêtue par un garnissage ou coiffe de protection 6 constitué notamment en tissu, cuir ou matière plastique.

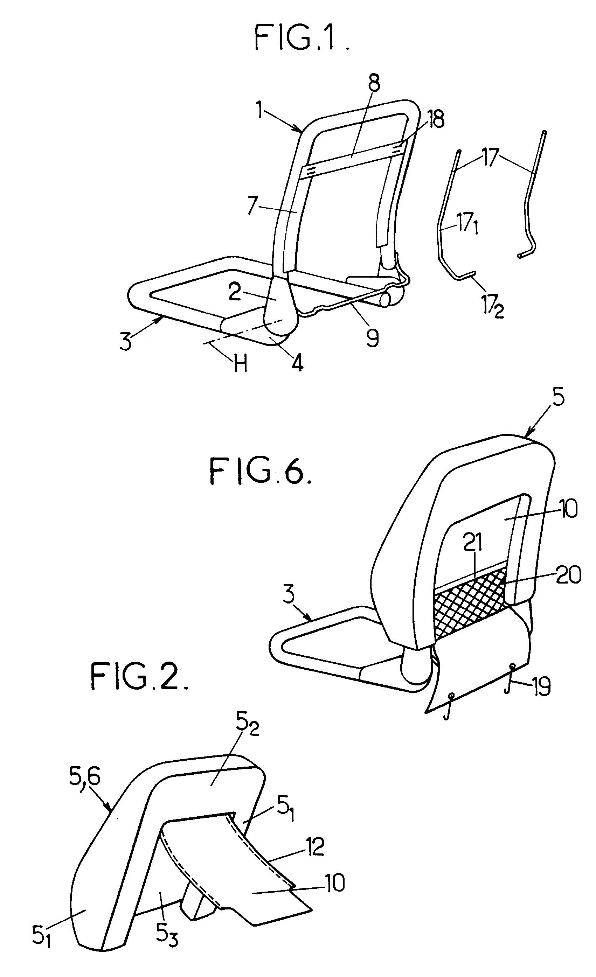

Comme visible sur la figure 2, cette matelassure 5, destinée à chevaucher le cadre 1 à la façon d'une "chaussette" renversée, comprend essentiellement deux bourrelets latéraux 5₁ entretoisés par un bourrelet horizontal supérieur 5₂ et un plateau avant 5₃.

En d'autres termes, la matelassure 5 recouvre la face avant de la nappe élastique du dossier, mais non sa face arrière, qui forme en quelque sorte le fond d'une auge inclinée ouverte vers l'arrière du dossier.

C'est le fond de cette auge qu'il s'agit de fermer, selon l'invention, par un panneau accroché simplement et solidement au reste de l'ossature.

A cet effet l'on procède comme suit.

On soude le long des faces arrière des montants 1₁ du cadre 1 deux profilés métalliques 7 présentant un profil en J de façon telle que le bord recourbé de chaque J s'étende vers l'intérieur dudit cadre tout en présentant son ouverture vers ce cadre et vers l'avant du dossier.

On soude également sur les faces arrière des deux montants 1₁, en des points hauts de ceux-ci, les deux extrémités d'une traverse métallique 8 profilée également en J de façon telle que le bord recourbé du J s'étende vers le bas tout en présentant son ouverture vers le haut et vers l'avant du dossier.

On soude enfin sur la base du cadre 1 les extrémités recourbées vers l'avant et vers le haut d'un fil rigide horizontal 9 formant barre d'accrochage comme il sera précisé plus loin.

On a recours par ailleurs à un panneau souple 10, notamment en tissu, cuir ou matière plastique, de forme sensiblement rectangulaire, destiné à former le fond vertical ou peu incliné sur la verticale de l'auge inclinée définie ci-dessus, panneau présentant un bord horizontal supérieur 11 et deux ourlets latéraux 12 confectionnés de façon à former des logements tubulaires.

On assemble par couture ou piqûre le bord 11 le long du bord horizontal inférieur 13 de la portion de garnissage 6 revêtant le bourrelet horizontal 5₂ de la matelassure, lequel bord 13 est rigidifié par une baguette 14.

Puis on met en place par "chaussage inversé", c'est-à-dire par chevauchement de haut en bas, la matelassure 5 à laquelle est suspendu le panneau 10 sur le cadre 1 garni des éléments soudés 7, 8 et 9.

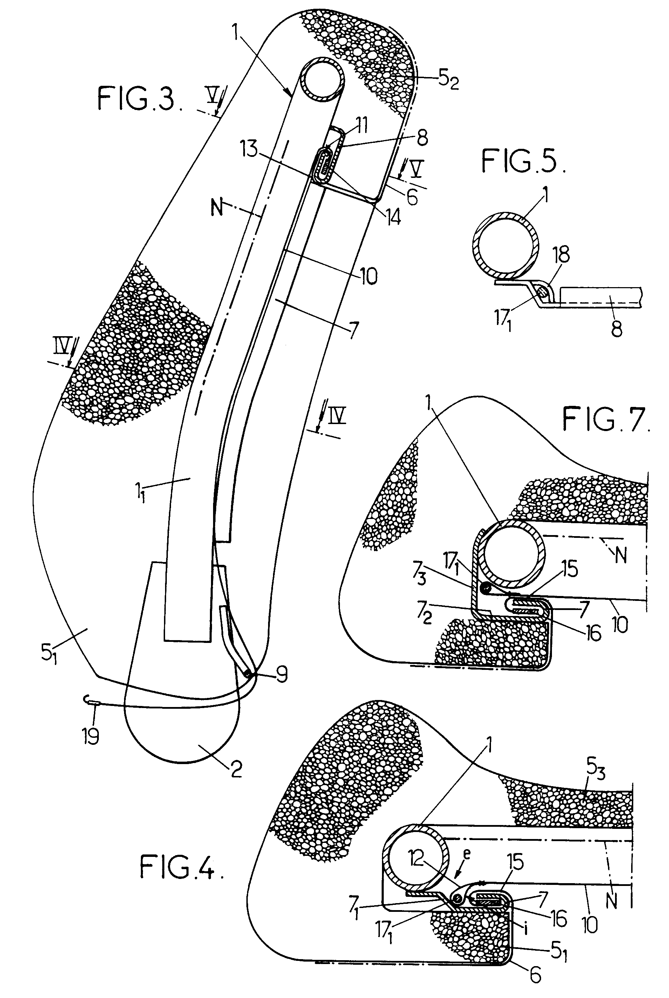

On loge alors la surépaisseur 14 ci-dessus dans l'ouverture de la traverse 8 profilée en J, ainsi que représenté sur la figure 3 : du fait du pliage à 180° de l'ensemble des deux feuilles superposées 6 et 10 au niveau du chevauchement du bord libre du profilé 8 en J, comme visible sur cette figure 3, l'accrochage ainsi obtenu du bord supérieur du panneau 10 sur le profilé 8 est très solide, en particulier si l'ouverture de ce profilé est un peu étranglée ou a tendance à se refermer élastiquement, comme il est préféré.

On accroche semblablement, sur les profilés latéraux 7 en J, les bords verticaux 15 des portions, du garnissage 6, qui revêtent les bourrelets latéraux 5₁ de la matelassure, bords qui sont rigidifiés par des baguettes 16 : le pliage à 180° de l'un de ces bords 15 au niveau du bord libre du profilé 7 en J correspondant est bien visible sur la figure 4.

Il reste alors à fixer les deux bords du panneau 10 ainsi que sa base sur la structure du dossier.

Pour ce qui est des bords, on a recours à deux tiges métalliques 17 (figure 1) coudées en L comprenant un long brin 17₁ vertical ou peu incliné sur la verticale prolongé inférieurement par un brin horizontal plus court 17₂ dont l'extrémité est rabattue vers le haut.

On enfile le brin 17₁ dans un ourlet 12 du panneau jusqu'à ce que son extrémité supérieure sorte vers le haut de cet ourlet et on assemble alors cette extrémité supérieure sur la traverse 8.

Cet assemblage est avantageusement réalisé en introduisant ladite extrémité supérieure dans un tunnel 18 réalisé par crevé d'un pontet dans ladite traverse (figure 5).

Pour que cette introduction soit réalisée à force et sans jeu, on coiffe avantageusement au préalable l'extrémité concernée par un chapeau ou tétine (non représenté) en matière plastique ou en élastomère.

L'ourlet 12 garni de son brin 17₁ est ensuite placé dans l'espace e qui est réservé entre le montant correspondant du cadre 1 et l'embouchure de la gorge définissant le J du profilé 7.

Puis on accroche sur la barre 9, à l'aide d'une agrafe, le brin horizontal 17₂ qui prolonge le brin 17₁ considéré.

Pour éviter les déplacements horizontaux relatifs ultérieurs du brin 17₂ par rapport à la barre 9, on fait avantageusement comprendre à ce brin et à cette barre des portions décalées transversalement sur lequelles sont effectués les agrafages.

Il suffit ensuite de fixer la base du panneau 10 sur des portées appropriées de la structure de l'assise, notamment à l'aide d'attaches appropriées 19, après rabattement de cette base au-dessous de la barre 9, vers l'avant du dossier : lesdites attaches sont avantageusement d'un type élastiquement extensible, pour rendre possibles les réglages du dossier en inclinaison autour de l'axe H.

Le panneau 10 est alors solidement fixé sur la structure du dossier.

Cette fixation est si solide qu'elle se prête facilement à l'addition d'un filet ou sac porte-revue 20 (figure 6) ouvert vers le haut contre la face extérieure dudit panneau 10, la fixation de ce filet contre ce panneau étant en général effectuée avant même exécution de la couture supérieure 11 dudit panneau sur le garnissage 6.

Dans le mode de réalisation illustré sur la figure 4, le profilé 7 présente un décrochement 7₁ permettant de décaler un peu vers l'arrière du dossier le bord recourbé en J de ce profilé : cette mesure n'est pas indispensable, mais elle peut être intéressante pour écarter les risques de contact entre la nappe élastique N et le profilé 7 lors des déformations de cette nappe.

Dans une variante illustrée sur la figure 7, le profilé 7 est conformé de façon telle que son bord recourbé en J ne fasse pratiquement pas saillie à l'intérieur du cadre 1, mais se trouve derrière ce cadre, de façon à donner une largeur maximum au creux évidé dans l'arrière du dossier.

Dans cet exemple, le bord recourbé en J du profilé 7 termine une aile plane transversale 7₂ de ce profilé qui prolonge elle-même une aile plane verticale longitudinale 7₃ rapportée par soudure sur le bord extérieur du montant 1₁ correspondant.

En suite de quoi et quel que soit le mode de réalisation adopté, on dispose d'un dossier de siège dont la face arrière est délimitée en son centre par une zone rentrante à fond souple tendu, le montage de ce fond étant à la fois solide et particulièrement facile à réaliser.

## Revendications

1. Dossier de siège de véhicule à face arrière rentrante constitué par un cadre rigide (1) en U renversé, par une nappe élastique (N) tendue à l'intérieur de ce cadre et par une matelassure (5) en matière souple et élastique recouvrant ledit cadre et la face avant de ladite nappe, caractérisé en ce qu'il comprend trois profilés métalliques en J constituant respectivement deux montants (7) et une traverse horizontale supérieure (8) et formant ensemble un U renversé, soudés sur le cadre de façon à présenter les bases des J à l'intérieur de ce cadre avec leurs ouvertures orientées vers ledit cadre, chaque ouverture de J étant occupée par un bord adjacent du garnissage (6) qui recouvre la matelassure (5), une barre métallique horizontale (9) également soudée sur le cadre à la base arrière du dossier, un panneau souple (10) vertical ou peu incliné sur la verticale bordé latéralement par deux ourlets (12) et supérieurement par une ligne horizontale de couture (11) le long du bord contigu (13) du garnissage, et deux tiges métalliques (17) coudées en L comprenant chacune un brin vertical ou peu incliné sur la verticale (17₁) logé dans l'un des deux ourlets ci-dessus, brin dont l'extrémité supérieure est fixée sur la traverse et un brin inférieur horizontal (17₂) fixé sur la barre (9).

2. Dossier de siège selon la revendication 1, caractérisé en ce que la fixation de chaque extrémité supérieure de tige coudée (17) sur la traverse (8) est effectuée en faisant traverser à force par cette extrémité, coiffée de préférence par une tétine en matière plastique ou élastomère, un canal (18) constitué par un crevé pratiqué au voisinage de l'une des deux extrémités horizontales de la traverse.

3. Dossier de siège selon l'une quelconque des revendications 1 et 2, caractérisé en ce que la fixation de chaque brin inférieur (17₂) de tige coudée sur la barre (9) est effectuée par agrafage sur un tronçon décalé de cette barre.

## Claims

1. A vehicle seat back having a reentrant rear face, the seat back being constituted by an upsidedown U-shaped rigid frame (1), by a resilient sheet (N) tensioned inside the frame, and by padding (5) of resilient and flexible material covering said frame and the front face of said sheet, the seat back being characterized in that it includes three J-shaped metal section bars respectively constituting two uprights (7) and a top horizontal cross-member (8) and together forming an upsidedown U-shape, the bars being welded to the frame so that the bases of their J-shapes lie on the inside of the frame and so that their openings face towards the outside of said frame, each opening of a J-shape being occupied by an adjacent edge of a facing (6) that covers the padding (5), a horizontal metal bar (9) which is also welded to the frame at the bottom and to the rear of the seat back, a flexible panel (10) which is vertical or slightly sloping relative to the vertical and which is bounded laterally by two hems (12) and along the top by a horizontal line of stitching (11) along the adjacent edge (13) of the facing, and two L-shaped metal rods (17) each comprising a length that is vertical or that slopes slightly relative to the vertical (17₁) received in a corresponding one of the above two hems, the top ends of said lengths being fixed to the cross-member, and each having a horizontal bottom length (17₂) fixed to the bar (9).

2. A seat back according to claim 1, characterized in that the fixing between the top end of each L-shaped rod (17) on the cross-member (8) is performed by forcing said end, preferably covered by a teat of plastic or elastomer material, into a channel (18) constituted by punching formed in the vicinity of one of the two horizontal ends of the cross-member.

3. A seat back according to anyone of claims 1 and 2, characterized in that each bottom length of bent rod (17₂) is fixed to the bar (9) by stapling to an offset length of said bar.

## Patentansprüche

1. Rückenlehne für Kraftfahrzeuge mit einer vertieften Rückseite, die aus einem starren Rahmen (1) in der Form eines umgekehrten U, einer elastischen Einlage (N), die im Inneren dieses Rahmens verspannt ist und einem Polster (5) aus nachgiebigem und elastischem Material besteht, das den Rahmen und die Vorderfläche der Einlage bedeckt, dadurch gekennzeichnet, daß die Rückenlehne folgende Teile enthält: drei Metallprofile, die die Form eines J haben und zwei Stützen (7) und einen oberen waagerechten Querträger (8) bilden und die gemeinsam die Form eines umgekehrten U haben und mit dem Rahmen so verschweißt sind, daß die Füße der J-Profile zum Inneren des Rahmens weisen, wobei ihre Öffnungen zum Rahmen gerichtet sind und jede Öffnung des J durch einen angrenzeden Rand des Futters (6) besetzt ist, das das Polster (5) bedeckt, eine waagerechte Metallstange (9), die ebenfalls mit dem Rahmen am hinteren unteren Teil der Rückenlehne verschweißt ist, eine nachgiebige Platte (10), die senkrecht oder leicht zur Senkrechten geneigt verläuft und seitlich von zwei Säumen (12) und oben durch eine waagerechte Naht (11) längs des angrenzenden Randes (13) des Futters begrenzt wird und zwei L-förmig gebogene Metallstäbe (17) mit jeweils einem senkrechten oder leicht zur Senkrechten geneigt verlaufenden Abschnitt (17₁), der in einem der beiden Säume angeordnet ist, wobei das obere Ende des senkrechten Abschnitts an dem Querträger befestigt ist, und einem unteren waagerecht verlaufenden Abschnitt (17₂), der an der Stange (9) befestigt ist.

2. Rückenlehne nach Anspruch 1, dadurch gekennzeichnet, daß die Befestigung der oberen Enden der gebogenen Stäbe (17) an dem Querträger (8) in der Weise erfolgt, daß jedes Ende, das vorzugsweise mit einer Tülle aus plastischem oder elastomerem Material versehen ist, unter Kraftaufwand durch einen Kanal (18) geschoben wird, der in der Nähe eines der beiden waagerechten Enden des Querträgers ausgebildet ist.

3. Rückenlehne nach einem der Ansprüche 1 und 2, dadurch gekennzeichnet, daß die Befestigung der unteren Abschnitte (17₂) der gebogenen Stäbe an der Metallstange (9) durch Verklammern an einem versetzten Abschnitt dieser Stange erfolgt.
